# DEMANDE DE BREVET EUROPEEN

(11) **EP 1 623 618 A1**
(43) Date de publication de la demande: **08.02.2006**
(21) Numéro de dépôt: 05358009.8
(22) Date de dépôt: 04.08.2005
(51) Int. Cl.: A01D 46/26

(54) **Matériel de récolte de fruits détachés des arbres ou arbustes fruitiers**

(30) Priorité: 06.08.2004 FR 0408706
(71) Demandeur: Duplan, Christophe, 13550 Paluds de Noves (FR)
(72) Inventeur: Duplan, Christophe, 13550 Paluds de Noves (FR)
(74) Mandataire: Marek, Pierre

(57) **Abrégé**

Matériel de récolte de fruits détachés des arbres ou arbustes fruitiers, comportant un châssis roulant (1), caractérisé en ce qu'il comprend un bâti basculant (5) relié, au moyen d'articulations (4), à l'un des côtés de ce châssis, des moyens pour le basculement dudit bâti autour de son axe d'articulation, une nacelle de réception (8) des fruits, montée avec une aptitude de translation sur ce bâti basculant (5), dans au moins une direction perpendiculaire au sens de déplacement du châssis roulant (1), de sorte à pouvoir occuper une position débordante par rapport à au moins l'un des côtés desdits châssis et bâti, la partie ou côté de cette nacelle susceptible d'être amené en débordement latéral étant pourvu d'une ouverture (11), pour le passage des troncs des arbres fruitiers, lors de la récolte.

## Description

La présente invention concerne un matériel de récolte de fruits détachés des arbres ou arbustes fruitiers, tels qu'olives, noix, noisettes, amandes, châtaignes, cerises, mirabelles, cerises du caféier, pruneaux, etc...

Plus précisément, l'invention concerne un matériel destiné à la mise en oeuvre d'une méthode selon laquelle une surface de réception, de préférence souple, est positionnée, par des moyens mécaniques, autour du tronc et sous les branches fructifères, de sorte à recueillir les fruits détachés desdites branches au moyen de secousses ou vibrations appliquées par des appareils portables ou des vibreurs portés par des châssis tractés ou automoteurs. Les fruits ainsi recueillis sont conduits jusqu'à un collecteur et, de là, dans des conteneurs.

De nombreux matériels ont été proposés pour la mise en oeuvre de cette méthode de récolte.

Dans le document FR-A-2.597.704, est décrite une machine de récolte de fruits comprenant une installation de réception des fruits détachés des arbres, exécutée en deux parties équipées, chacune, d'un réceptacle muni, latéralement, d'une bâche déroulable, et susceptibles d'être reliées, de manière articulée, dans le prolongement l'une de l'autre, la partie avant de ladite installation étant agencée de façon à pouvoir être installée sur le côté d'un tracteur agricole, tandis que la partie arrière est agencée de manière à pouvoir être attelée, de manière articulée, à un élément du châssis de la partie avant.

Cette machine qui nécessite deux systèmes d'attelage particuliers et deux dispositifs enrouleurs de bâche motorisés est plutôt complexe et coûteuse ; elle est relativement encombrante ; elle nécessite des interventions manuelles pour le déroulement et le positionnement des bâches et plusieurs opérateurs malgré lesquels la récolte ne peut s'effectuer qu'à un rythme lent.

Dans le document FR-2.522.245, est proposé un matériel agricole pour la récolte de fruits, comprenant deux ensembles récepteurs indépendants agencés pour pouvoir être attelés, chacun, à un tracteur, et pour pouvoir être disposés de part et d'autre du tronc d'un arbre fruitier, de façon à se côtoyer par leurs bords libres disposés en regard, chaque ensemble récepteur comprend un conteneur longiforme et des panneaux mobiles aptes à basculer de part et d'autre de ce conteneur. Ce matériel nécessite l'utilisation de deux ensembles indépendants, de deux tracteurs pour assurer leurs déplacements, et de deux opérateurs pour la conduite de ces tracteurs, ce qui influt défavorablement sur le coût de la récolte. En outre, ce matériel exige une grande attention et une grande habileté de la part des conducteurs des tracteurs pour amener les panneaux mobiles en position adjacente de chaque côté du tronc, tandis que le déploiement des panneaux récepteurs latéraux par pivotement autour d'un axe horizontal inférieur ne permet pas leur positionnement sous des branches fructifères relativement basses.

Le document FR-A-2.556.924 décrit un dispositif de récolte comprenant un châssis roulant supportant un cylindre accouplé à un moteur pour l'enroulement et le déroulement d'une bâche et un convoyeur disposé parallèlement audit cylindre et au-dessous de ce dernier ; la bâche est fendue sur une partie de sa longueur, à partir de son bord libre et perpendiculairement à son axe d'enroulement, tandis que le bord libre de ladite bâche est supporté, de part et d'autre de la fente, par des chariots motorisés. Il s'agit d'un matériel relativement complexe dont la mise en oeuvre nécessite l'utilisation de quatre moteurs (un pour le convoyeur, un pour l'enrouleur et un pour chacun des deux chariots) et un système permettant le fonctionnement synchronisé des trois moteurs coopérant au déroulement et au ré-enroulement de la bâche. En outre, en raison des inégalités du terrain, on peut supposer que, dans de nombreux cas, il sera impossible d'obtenir une bonne trajectoire des chariots prévus pour tirer les deux parties de bâche de chaque côté du tronc des arbres.

Dans le document FR-A-2.730.127, est montré un engin mobile pour la cueillette des fruits poussant sur les arbres, comprenant un châssis mobile portant un plateau destiné à recevoir les fruits et pouvant basculer vers l'arrière de manière à faire tomber ceux-ci dans une trémie, ce plateau comportant deux plaques latérales relevables agencées pour se trouver de chaque côté du tronc de l'arbre fruitier lorsque le dispositif est en place. Ce matériel nécessite d'amener le châssis mobile pratiquement au contact du tronc des arbres, ce qui n'est pas toujours facile ou possible à réaliser sur le terrain, tandis que le déploiement des plaques latérales réceptrices par basculement, présente l'inconvénient souligné au sujet du dispositif décrit dans le document FR-A-2.522.245.

Dans les documents FR-2.686.480, FR-2.724.533, FR-2.724.534, FR-2.731.872, sont décrits des matériels agricoles semblables pour la récolte de fruits portés par des arbres ou arbustes, dont le système de réception est constitué par une pluralité de panneaux mobiles de forme approximativement triangulaire aptes à se déployer autour d'un tronc d'arbre à la manière d'un éventail pour prendre la forme d'une corolle. Ce système est complexe et fragile ; il requiert un temps de mise en place autour de chaque arbre plutôt long ; le véhicule porteur doit également être positionné très près des troncs des arbres à récolter et il ne peut être utilisé que si un espace relativement important est ménagé entre les troncs des arbres de la plantation afin de permettre le déploiement de la corolle.

Dans les documents FR-2.232.981 et US-3.105.302, sont représentés des dispositifs récepteurs de fruits comportant notamment un châssis déplaçable sur roues dans le sens de la rangée d'arbres, un chariot déplaçable, par l'intermédiaire de moyens appropriés, dans des glissières horizontales transversales audit châssis, et un tablier supérieur s'articulant autour d'un axe longitudinal à l'extrémité du chariot située du côté de la rangée d'arbres, ces dispositifs comprenant en outre un tapis convoyeur pour l'évacuation des fruits et un moyen assurant le relevage dudit tablier autour de son axe d'articulation longitudinal.

Selon ces deux documents, le bâti supportant le tablier récepteur de récolte, n'est pas relié au moyen d'articulations à l'un des côtés du châssis roulant, mais monté avec une aptitude de coulissement transversal sur ledit châssis roulant.

Il en résulte que la partie des machines qui se déplace transversalement et vient en débordement latéral par rapport au châssis roulant, est constituée par un ensemble relativement lourd constitué du bâti coulissant et du tablier récepteur de récolte basculant. Il en découle des inconvénients notables tels que :
- l'obligation d'utiliser une motorisation relativement puissante pour assurer les déplacements de l'ensemble bâti coulissant-tablier de réception ;
- la relative instabilité des machines, découlant du fait que l'ensemble mobile qui vient en débordement du châssis porteur roulant, en cours de travail, est plutôt assez lourd ; on observe d'ailleurs qu'il est prévu d'utiliser des contrepoids, dans le document US-3.105.342, pour s'opposer au renversement de la machine, lorsque l'ensemble coulissant est amené en position de débordement latéral ;
- une complication de la fabrication et du fonctionnement des machines résultant de l'obligation de prévoir, d'une part, des moyens pour assurer les déplacements de l'ensemble mobile (bâti coulissant et tablier de réception) et, d'autre part, le basculement du tablier de réception.
- l'obligation d'amener une source d'énergie sur la machine pour effectuer les mouvements de ses parties mobiles.

L'invention se propose de mettre à la disposition des oléiculteurs et autres fruiticulteurs, un matériel de récolte dépourvu des imperfections précédemment soulignées des machines décrites dans les documents susmentionnés de l'art antérieur.

Selon l'invention, cet objectif est atteint grâce à un matériel de récolte comprenant un châssis roulant, attelable ou automoteur, un bâti basculant relié, au moyen d'articulations, à l'un des côtés de ce châssis, des moyens pour le basculement dudit bâti autour de son axe d'articulation, une nacelle de réception des fruits montée avec une aptitude de translation sur ce bâti basculant, dans une direction perpendiculaire au sens de déplacement du châssis roulant, de sorte à pouvoir occuper une position débordante par rapport à l'un au moins des côtés desdits châssis et bâti, la partie ou côté de cette nacelle susceptible d'être amené en débordement latéral étant pourvue d'une ouverture pour le passage des troncs des arbres fruitiers, lors de la récolte.

Selon une disposition avantageuse, les moyens assurant le pivotement du bâti basculant sont constitués par un vérin fixé, par l'intermédiaire de ses extrémités opposées et au moyen d'articulations, d'une part, au châssis roulant et, d'autre part, audit bâti basculant.

Selon une autre disposition avantageuse, la nacelle présente un profil transversal en forme de V très ouvert, et sa partie inférieure constitue une goulotte de collectage des fruits détachés des arbres.

Selon une autre disposition avantageuse, la nacelle comporte un fond plat, de préférence muni de trous d'égouttage, et deux panneaux latéraux inclinés, par rapport audit fond, ces derniers étant constitués par un matériau souple perméable.

Grâce aux dispositions susmentionnées, l'invention permet de réaliser un matériel de récolte automatisé et robuste, de conception, fonctionnement et entretien simples, facilement dirigeable par un seul opérateur, de faible encombrement et capable d'évoluer et de travailler dans tous types d'oliveraies ou autres plantations d'arbres fruitiers ; ce matériel permettant en outre d'obtenir d'importants gains de productivité.

Par rapport à l'état de la technique illustrée par les documents FR-2.232.981 et US-3.105.342, la partie (nacelle de réception) de la machine qui se déplace transversalement et vient en débordement latéral par rapport aux deux autres parties (châssis et bâti) est très allégée, ce qui procure plusieurs avantages intéressants :
- une grande facilité de déplacement de la partie mobile (nacelle de réception) dont la mise en mouvement peut résulter d'une simple poussée manuelle, de sorte que l'utilisation d'un actionneur (vérin, par exemple) n'est pas indispensable ;
- meilleure stabilité de l'appareil en cours d'utilisation, résultant du fait que seule la nacelle vient en débordement du châssis porteur ;
- simplification de la construction et du fonctionnement en raison du fait que le déplacement de la seule nacelle de réception peut être obtenu par un actionneur de très faible puissance, voire même sans aucun actionneur comme c'est le cas pour le mode de réalisation finalement adopté par le Déposant pour la commercialisation de son matériel.

Il en découle une machine qui n'a besoin d'aucune source d'énergie hormis un engin de traction tel que tracteur, quad, motoculteur ou autre.

Les buts, caractéristiques et avantages ci-dessus, et d'autres encore, ressortiront mieux de la description qui suit et des dessins annexés dans lesquels :
La figure 1 est une vue en perspective illustrant le matériel de récolte selon l'invention, représenté attelé à un tracteur.
La figure 2 est une vue en perspective d'un exemple de réalisation de ce matériel de récolte.
La figure 3 est une vue en plan de la figure 2.
La figure 4 est une vue latérale du matériel de récolte.
La figure 5 est une vue arrière, à plus grande échelle, de la figure 4.
Les figures 6A et 6B sont des vues à caractère schématique, respectivement, en plan et arrière (à plus grande échelle), montrant le matériel de récolte amené en position à proximité d'un arbre à récolter.
Les figures 7A et 7B sont des vues à caractère schématique, respectivement en plan et arrière, montrant le matériel positionné pour la récolte.
La figure 8 est une vue arrière, à caractère schématique, montrant le déversement des produits récoltés dans une caisse ou palox.
La figure 9 est une vue en perspective d'un autre mode de réalisation du matériel de récolte selon l'invention.
La figure 10 est une vue latérale du matériel de récolte représenté à la figure 9.
La figure 11 est une vue en plan de ce matériel montré en position de récolte.
La figure 12 est une vue partielle, en plan, illustrant la forme de l'ouverture d'accostage.

On se reporte auxdits dessins pour décrire des exemples de réalisation avantageux, bien que nullement limitatifs, du matériel de récolte selon l'invention.

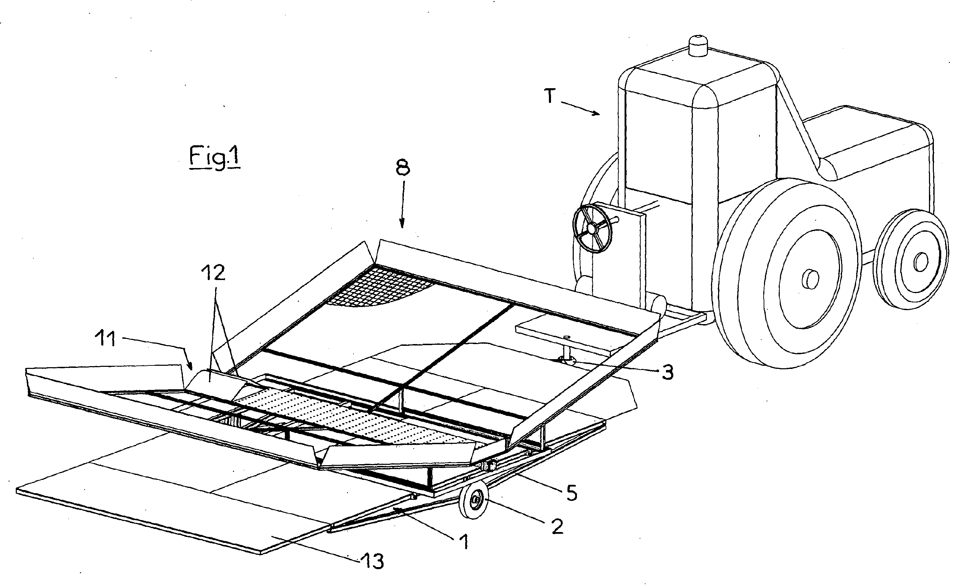

La figure 1 montre le matériel de récolte selon l'invention représenté attelé à un tracteur T, et on décrit ci-après un mode d'exécution économique correspondant à un engin attelable. Cependant, on souligne encore que ce matériel pourrait être réalisé sous forme d'engin automoteur.

D'autre part, l'exemple de réalisation illustré est plus spécialement destiné à recueillir des olives ou autres petits fruits détachés au moyen d'appareils portables, motorisés ou non. Pour cette raison, la nacelle est dimensionnée de manière à couvrir une surface correspondant à un peu plus de la moitié de la surface couverte par la ramure des arbres. Cependant, moyennant quelques agencements et dimensions plus importantes, il n'est pas exclu de réaliser des matériels comportant une nacelle réceptrice couvrant la totalité de la ramure des arbres à récolter.

Le matériel de récolte selon l'invention comprend un châssis 1 qui peut être constitué par un robuste cadre de forme générale rectangulaire, renforcé par des entretoises. Ce châssis est muni, par exemple dans sa partie centrale, d'au moins une paire de roues 2, et il est pourvu, à l'avant, de moyens d'attelage 3 permettant de le relier à l'arrière d'un tracteur T (figure 1).

Sur l'un des côtés longitudinaux de ce châssis, est fixé, avec une aptitude de pivotement et au moyen d'articulations 4 à axe longitudinal horizontal, un bâti basculant 5. Ce bâti basculant est installé transversalement par rapport au châssis roulant 1, de préférence au-dessus de la partie médiane de celui-ci. Il est pourvu de rails 6 orientés perpendiculairement à l'axe longitudinal du châssis 1 ou axe d'avancement du matériel de récolte, en cours d'utilisation.

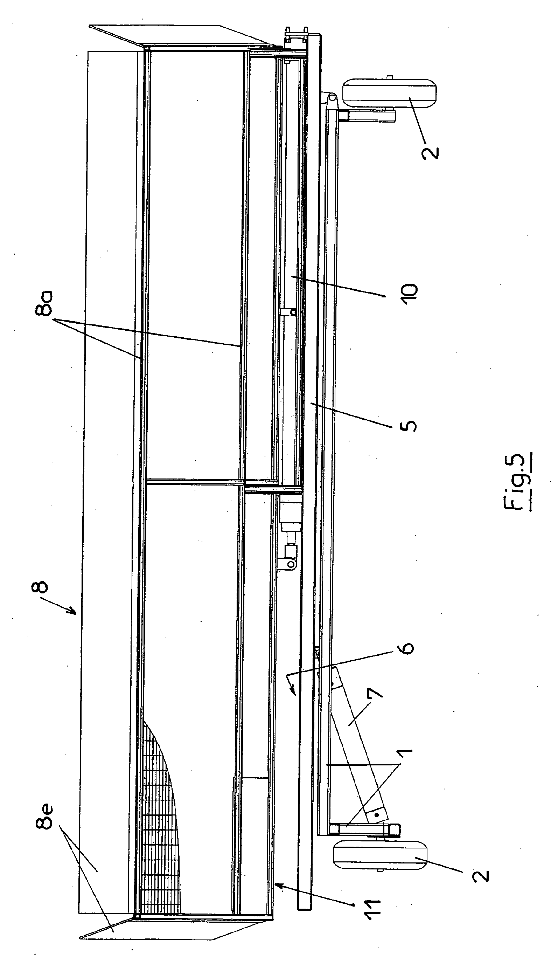

Des moyens permettent le basculement du bâti 5, autour de l'axe des articulations 4, ces moyens pouvant être constitués par un vérin pneumatique, ou par un vérin à gaz, ou par un vérin hydraulique, ou par un actionneur électrique, en fonction de l'énergie utilisée, l'exemple de réalisation illustré montrant un vérin 7 fixé par l'intermédiaire de ses extrémités opposées et au moyen d'articulations, d'une part, au châssis 1, et, d'autre part, audit bâti 5 (figure 5).

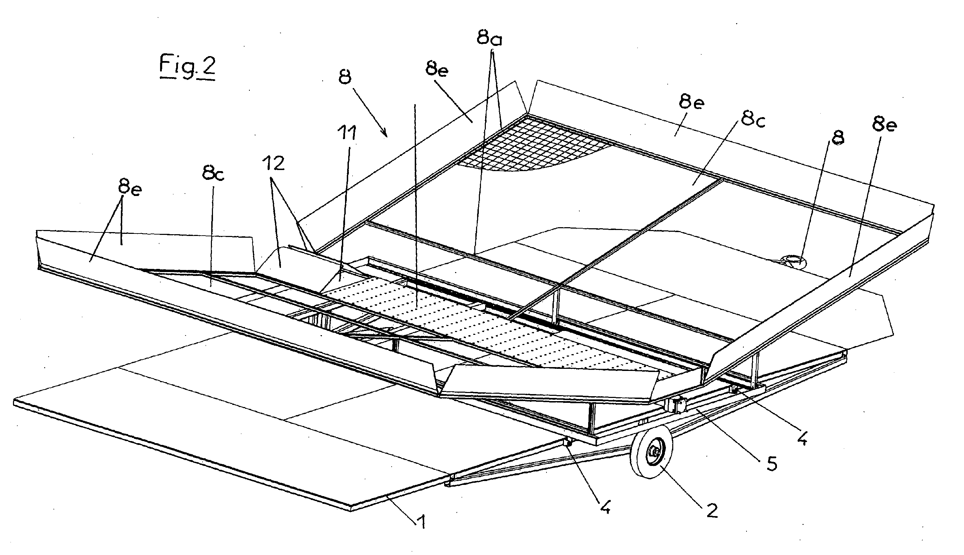

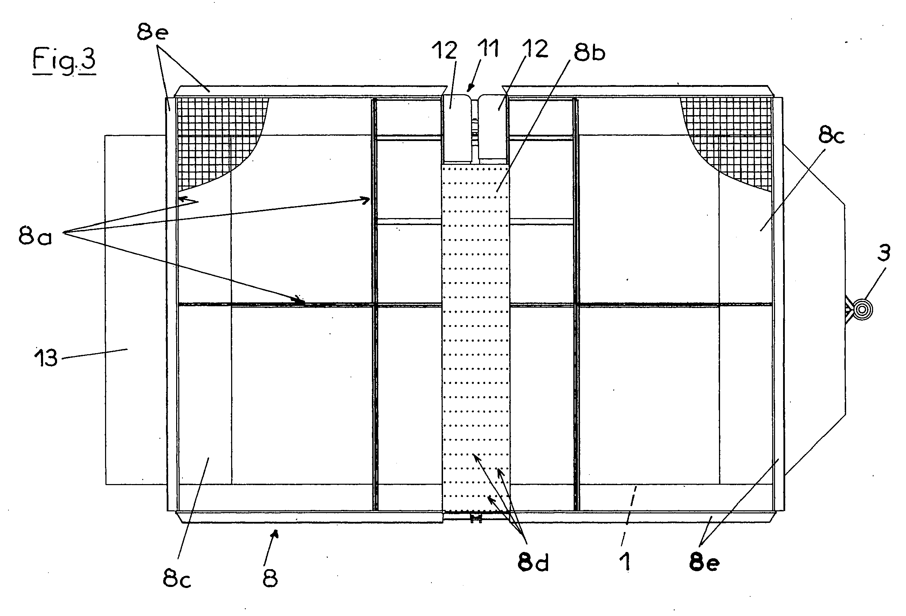

Sur le bâti basculant 5, est montée, avec une aptitude de translation transversale par rapport au châssis roulant 1, une nacelle 8 dont la base est munie de moyens de guidage, par exemple constitués par des galets 9 se déplaçant dans les rails 6 dudit bâti. Selon l'exemple de réalisation illustré aux figures 1 à 8, des moyens assurent les mouvements de translation de la nacelle dans des directions perpendiculaires à l'axe longitudinal du châssis roulant 1, ces moyens pouvant être constitués par au moins un vérin pneumatique, ou par un vérin hydraulique, ou par un actionneur électrique, ou actionnés manuellement, l'exemple de réalisation décrit montrant un vérin 10 placé sous la nacelle 8 et fixé, par l'intermédiaire de ses extrémités opposées, d'une part, au bâti basculant 5, et, d'autre part, à ladite nacelle 8. Le vérin 10 permet de placer la nacelle 8 dans une position d'avancement par rapport à l'un des côtés du bâti 5.

On observe que l'actionneur 10 ou des actionneurs 10 peu(ven)t être prévu(s) pour placer ladite nacelle en avancée à droite ou à gauche du bâti 5. De la sorte, la machine se déplaçant entre deux rangées d'arbres, peut, en stationnant entre ces deux rangées, récolter un arbre de l'un des rangs, puis un arbre de l'autre rang, avant de basculer la nacelle 8 pour déverser la récolte des deux arbres dans un récipient tel que caisse ou sac.

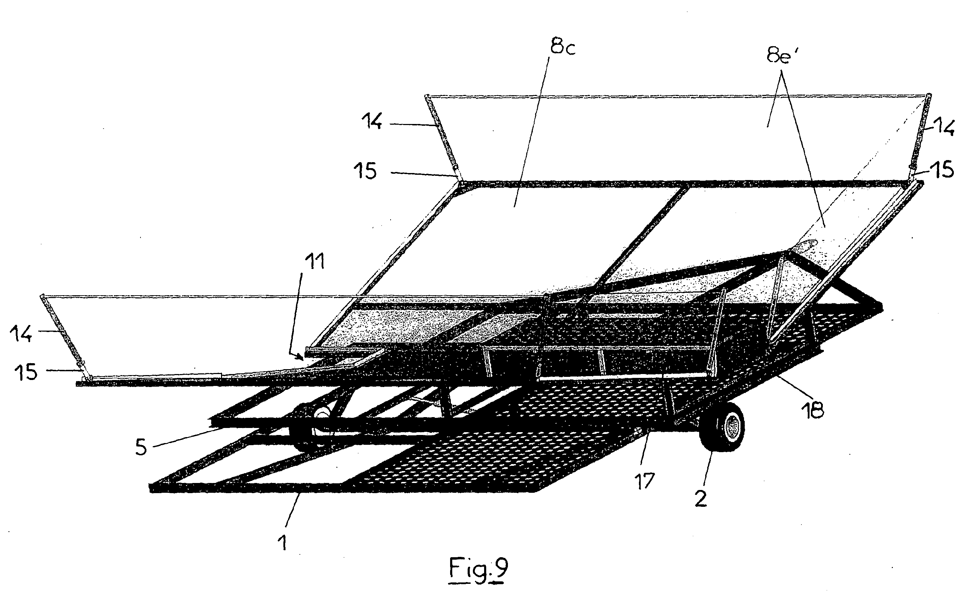

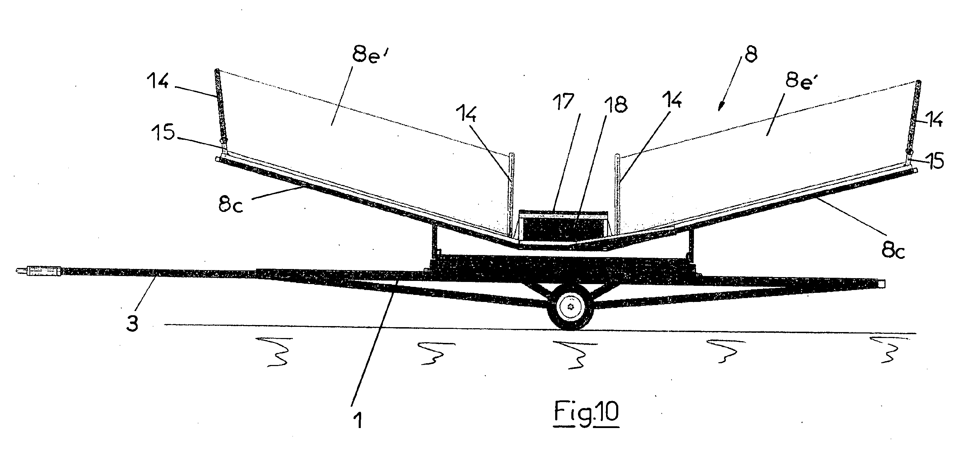

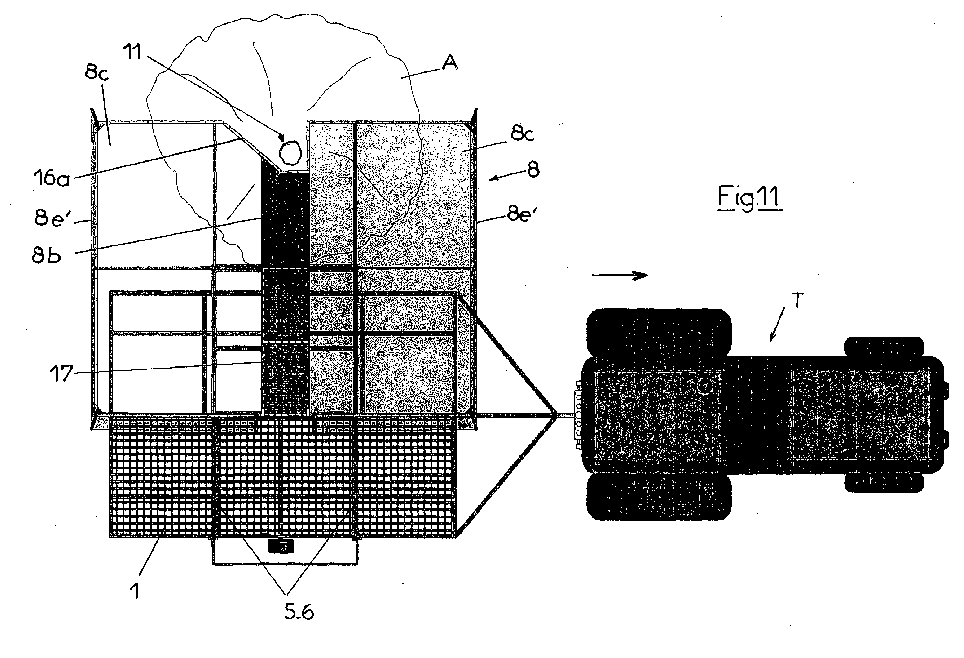

Cependant, l'utilisation d'un actionneur tel qu'un vérin 10 n'est pas indispensable. En effet, la nacelle réceptrice peut être facilement manoeuvrée à la main en raison de son faible poids et de son montage coulissant sur des rails placés horizontalement en dehors de la position de déversement de la récolte. Un tel mode d'exécution est illustré aux figures 9 à 11. Selon ce mode de réalisation, la nacelle 8 est montée avec une liberté de translation sur les rails horizontaux transversaux 6 du bâti basculant 5.

La commande des actionneurs (vérins pneumatiques, vérins hydrauliques, vérins électriques) est réalisée de manière classique à l'aide de systèmes connus en soi et qui, dans le cas de la présente invention, peuvent être d'une grande simplicité, ces systèmes bien connus, de l'homme de l'art ne sont donc pas décrits pour ne pas allonger inutilement la description. Ces actionneurs automatiques peuvent aussi être remplacés par un système de déplacement manuel connu en soi.

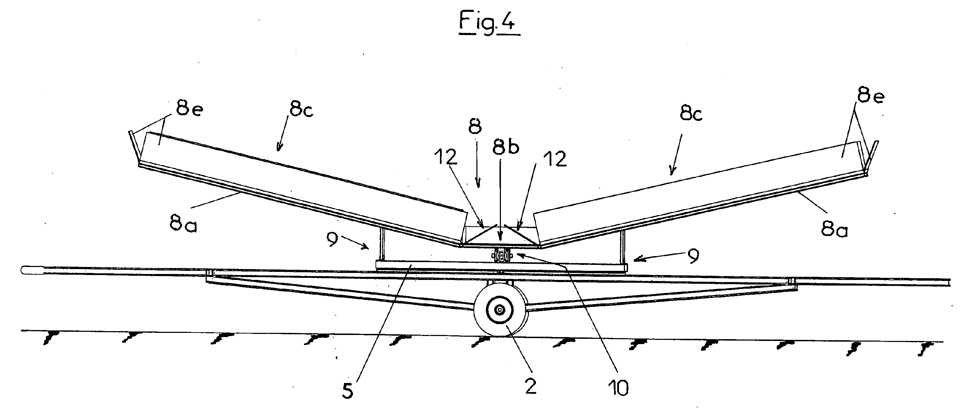

La nacelle 8 présente la forme d'un V très ouvert, comme le montre notamment la figure 4.

Cette nacelle comprend une ossature métallique 8a et un fond horizontal plat perméable 8b, par exemple constitué par une bande de tôle perforée dont les perforations 8d permettent un égouttage des olives ou autres fruits récoltés, lorsque ceux-ci sont mouillés. De chaque côté de cette bande de tôle 8b, la nacelle comporte des panneaux récepteurs inclinés 8c convergeant en direction du fond 8b de ladite nacelle. Les surfaces de réception de ces panneaux sont constituées par un matériau souple et perméable, par exemple par un filet à petites mailles fixé sur l'ossature 8a.

Selon le mode d'exécution illustré aux figures 1 à 8, les trois bords libres des panneaux récepteurs 8c sont munis de bandes déflectrices 8e semi-rigides, par exemple en matière plastique semi-rigide, pour retenir les olives ou autres fruits récoltés et les maintenir sur les surfaces réceptrices lors de leur chute, ces bandes ayant, par exemple, une inclinaison de l'ordre de 30° à 45° par rapport auxdites surfaces réceptrices.

La nacelle 8 ainsi réalisée peut être amenée en débord latéral du châssis 1, par l'intermédiaire du vérin 10 ou manuellement, ladite nacelle roulant ou glissant, lors de ce mouvement, sur les rails 6 ou autre dispositif de guidage du bâti basculant 5.

A l'avant, en considérant le mouvement précité et dans sa partie médiane, la nacelle 8 présente une ouverture d'accostage 11 dont la largeur correspond, par exemple, à celle de son fond plat 8b, cette largeur étant prévue pour être légèrement supérieure au diamètre des plus gros troncs des arbres à récolter. Grâce à cette ouverture 11, la nacelle peut enfourcher le tronc des arbres à récolter, de sorte à couvrir une surface correspondant à plus de la moitié de la surface couverte par la ramure desdits arbres.

Les bords longitudinaux de cette ouverture 11 peuvent être munis d'un rideau flexible 12 permettant le passage des troncs des arbres à récolter et se refermant autour desdits troncs, de sorte à retenir, dans la nacelle, les olives ou autres fruits récoltés qui tombent autour desdits troncs. Ces rideaux flexibles sont, par exemple, constitués par des lamelles de matière plastique semi-rigide s'étendant des bords respectifs de l'ouverture 11 jusqu'au milieu de celle-ci.

Selon le mode d'exécution illustré aux figures 9 à 12, les bords libres des panneaux récepteurs 8c de la nacelle de réception 8 sont munis de filets 8e' supportés, à leurs extrémités, par des tubes rigides par exemple par des tubes métalliques 14 portés part des ressorts 15, par exemple par des ressorts hélicoïdaux 15, permettant l'effacement desdits tubes en cas de heurt avec une branche d'arbres ou autre obstacle.

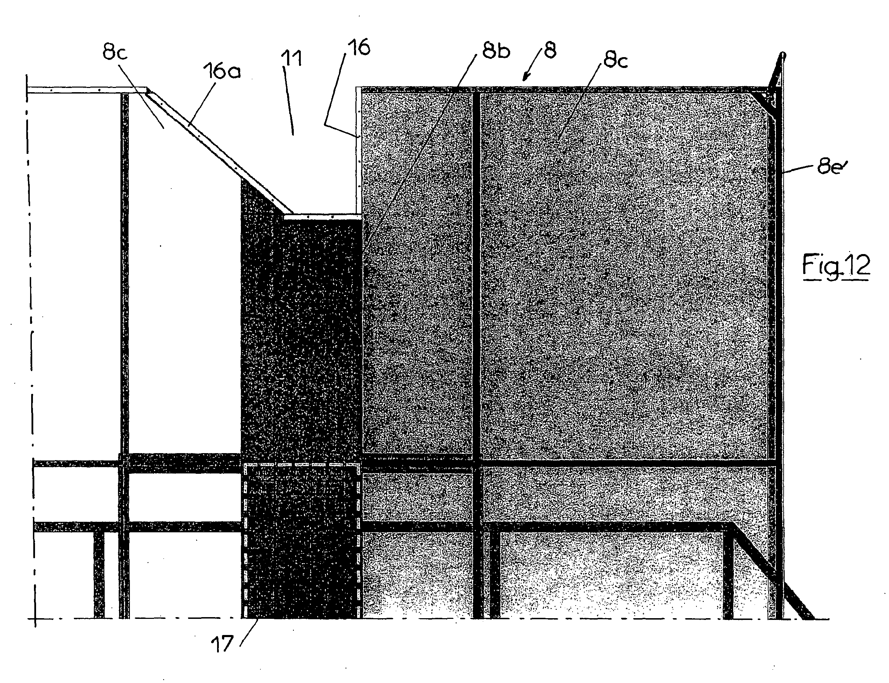

La figure 12 illustre un exemple avantageux de conformation de l'ouverture d'accostage 11. Selon cet exemple, les bords de cette ouverture sont matérialisés par une bordure rigide 16 dont le côté postérieur 16a est incliné vers l'arrière, en considérant le sens d'avancement de la machine de récolte en cours de travail. Grâce à cette inclinaison de la partie arrière 15a de cette bordure, par exemple de l'ordre de 35° à 45° par rapport à l'axe longitudinal de la machine, la nacelle réceptrice 8 se trouve automatiquement repoussée vers sa position initiale si l'opérateur oublie de replacer ladite nacelle dans cette position lorsque la machine est déplacée vers l'avant par le tracteur T. Selon ce mode d'exécution, les bords 16 de l'ouverture d'accostage 11 ne sont pas munis d'un rideau flexible tel que le rideau 12 précédemment décrit.

Suivant l'exemple de réalisation représenté aux figures 9 à 12, une passerelle 17 est installée au-dessus du fond 8b de la goulotte constituée par la nacelle réceptrice 8. Cette passerelle 17 a pour fonction de permettre à l'opérateur de s'approcher de l'arbre A, sans écraser les fruits recueillis.

Enfin, un volet basculant 18 est installé à l'extrémité de la goulotte à l'opposé de l'autre extrémité de celle-ci munie de l'ouverture d'accostage 11. Ce volet basculant a pour but de retenir les olives ou autres fruits récoltés dans la goulotte réceptrice lorsque la nacelle est en positon horizontale de récolte. La partie supérieure de ce volet basculant 18 est, par exemple, articulée sur un élément d'extrémité de l'ossature soutenant la passerelle 17, avec une aptitude de pivotement autour d'un axe horizontal.

L'utilisation et le fonctionnement du matériel de récolte selon l'invention sont très simples.

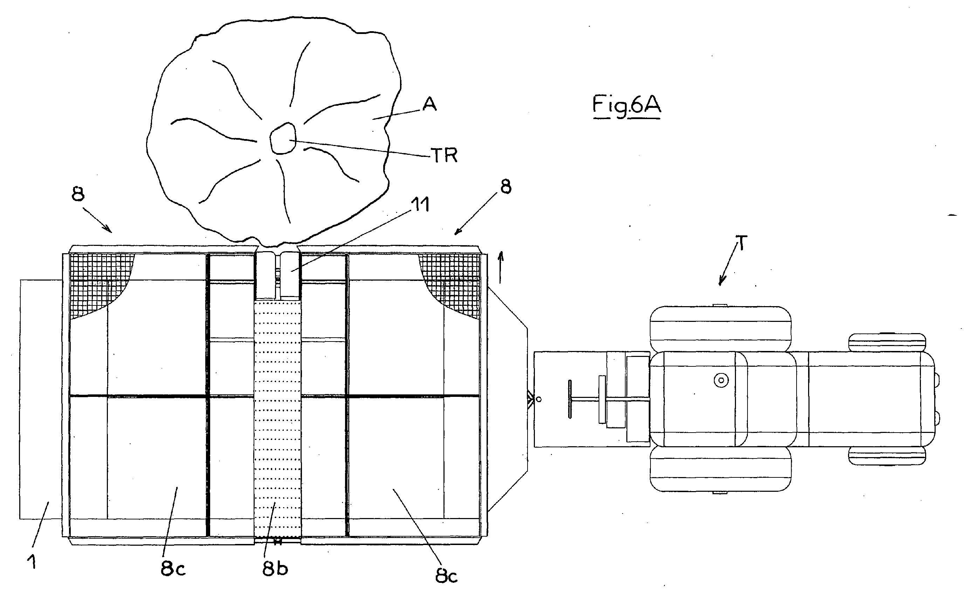

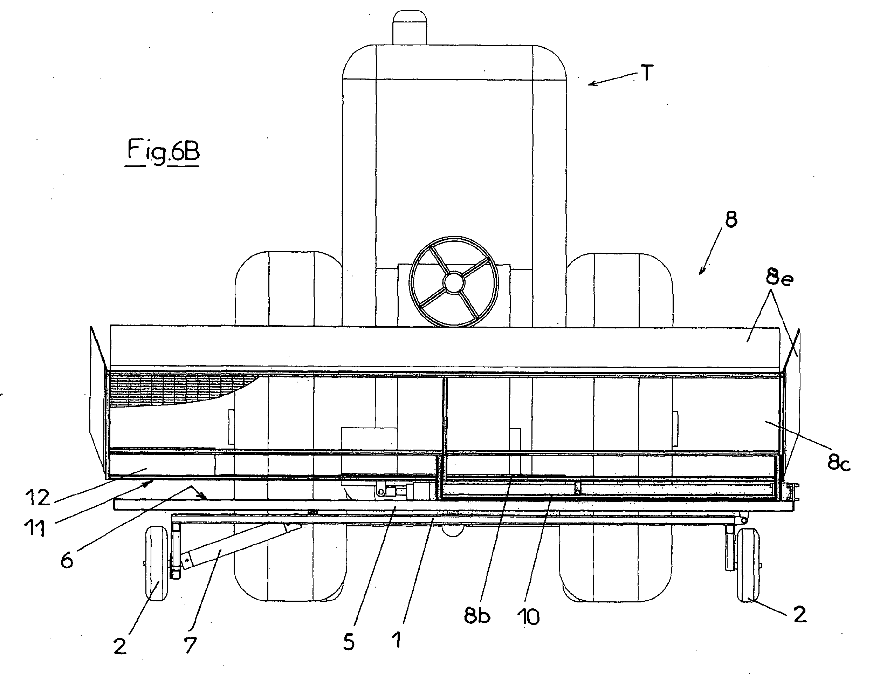

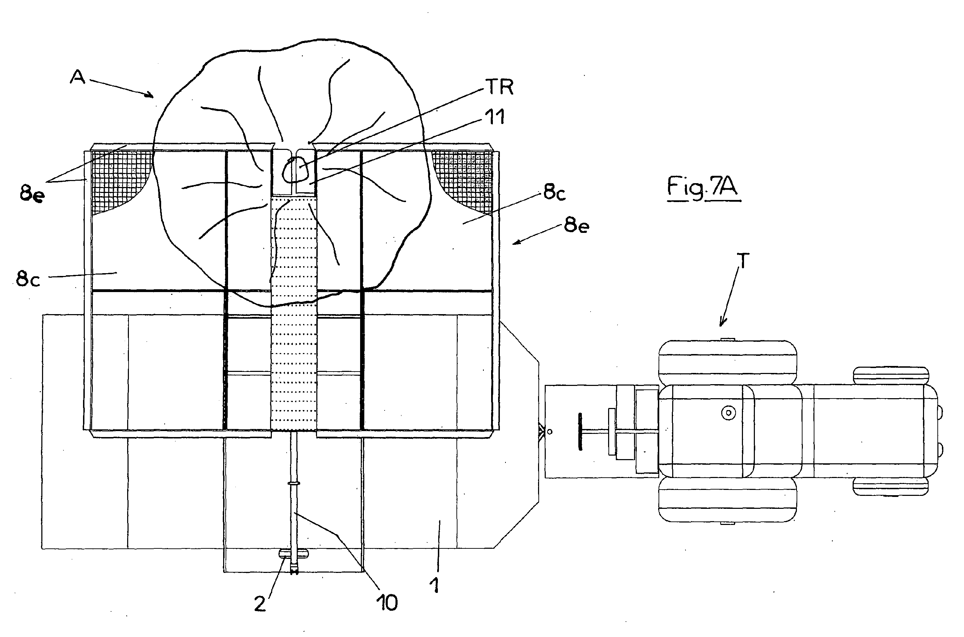

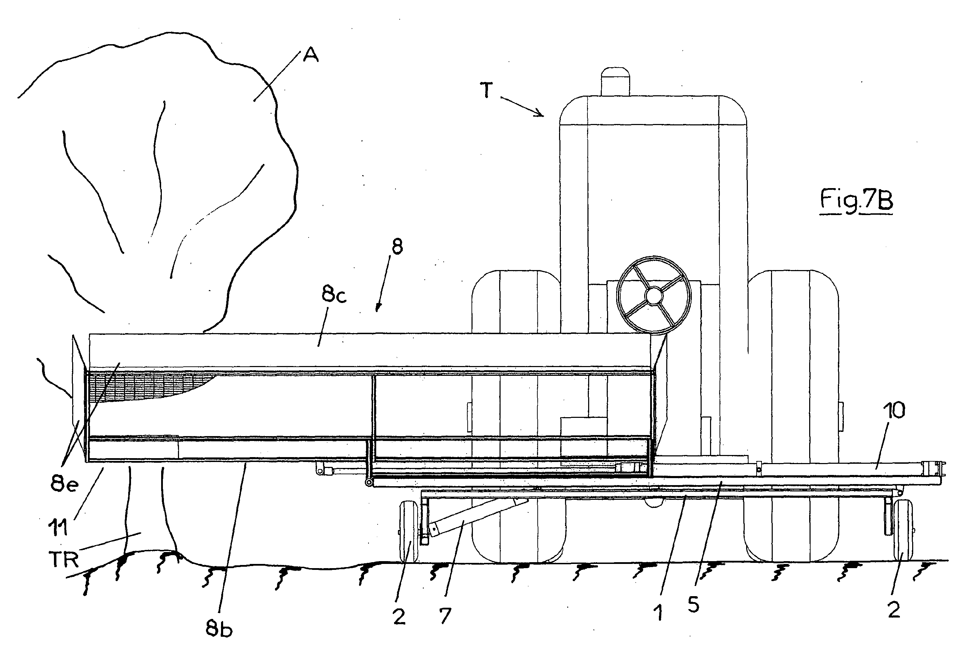

En considérant un mode de réalisation suivant lequel le déplacement latéral de la nacelle s'effectue à gauche par rapport au sens du déplacement du matériel de récolte, et l'application de ce dernier à la récolte d'olives, l'ensemble tracteur-remorque se déplace entre les rangs d'oliviers en serrant le rang de gauche. Lorsque l'axe médian de la nacelle se trouve positionné face à un arbre à récolter (figures 6A et 6B), on arrête le tracteur et la nacelle 8, poussée manuellement ou par l'intermédiaire du vérin 10, se déplace latéralement sous la frondaison dudit arbre (A), en direction du tronc (TR) de ce dernier qu'elle vient enfourcher jusqu'à dépasser le niveau dudit tronc (figures 7A et 7B).

L'opérateur fait alors tomber les olives, par exemple au moyen d'un peigne ou d'un appareil secoueur ou vibreur portable du genre décrit dans les documents EP-1.116.432 et EP-1.175.823. Pour effectuer ce travail, l'opérateur peut monter sur une portion dégagée de la plate-forme du matériel de récolte, ou sur la passerelle 17 représentée sur les figures 9 à 12.

Du fait de la forme en V évasé de la nacelle, les olives ou autres fruits détachés des arbres roulent vers le fond 8b de la goulotte constituée par ladite nacelle.

Lorsque la récolte des branches fructifères situées au-dessus de la nacelle débordante est achevée, ladite nacelle est ramenée au-dessus du châssis 1, manuellement ou par l'intermédiaire du vérin 10.

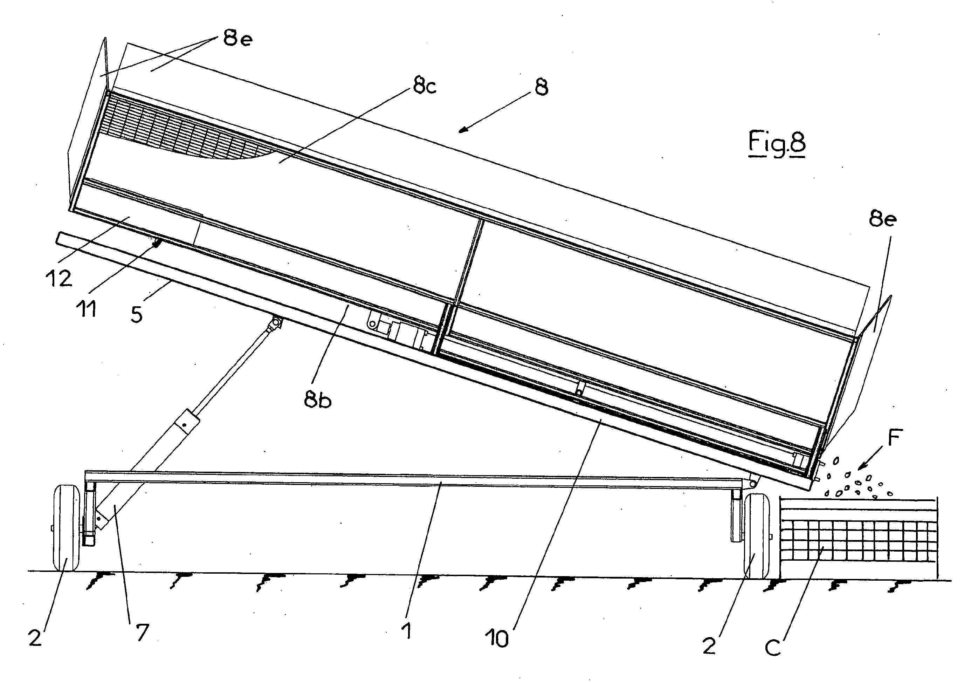

La nacelle 8 est ensuite inclinée en direction du bord opposé du châssis 1, par l'intermédiaire du vérin 7, de sorte que les olives ou autres fruits F recueillis dans le fond de la goulotte constituée par ladite nacelle, roulent et se déversent dans une caisse, un sac ou autre récipient C placé au-dessous de l'extrémité déversante de ladite goulotte opposée à celle qui est pourvue de l'ouverture 11 (figure 8). Si nécessaire, ce résultat peut être facilité en faisant aller et venir le vérin d'inclinaison 7 plusieurs fois de suite, en bout de course, afin de secouer la nacelle en position inclinée.

Lorsque la nacelle a été vidée, elle est replacée en position horizontale et l'opérateur peut déplacer le tracteur vers l'arbre suivant.

En bout de rang, l'ensemble de récolte tourne autour du dernier arbre récolté et repart en sens inverse en serrant le même rang sur la gauche, afin de récolter l'autre moitié des branches fructifères disposées sur le côté opposé dudit rang.

A l'arrière, le châssis 1 peut supporter une plate-forme 13 pour stocker et transporter les caisses vides ou autres contenants destinés au stockage et au transport des fruits récoltés.

La conduite du matériel de récolte, le secouage des arbres, le déversement de la récolte dans les caisses peuvent être effectués par un seul opérateur.

## Revendications

1. Matériel de récolte de fruits détachés des arbres ou arbustes fruitiers, comportant un châssis roulant (1), **caractérisé en ce qu'**il comprend un bâti basculant (5) relié, au moyen d'articulations (4), à l'un des côtés de ce châssis, des moyens (7) pour le basculement dudit bâti autour de son axe d'articulation, une nacelle de réception (8) des fruits, montée avec une aptitude de translation sur ce bâti basculant (5), dans au moins une direction perpendiculaire au sens de déplacement du châssis roulant (1), de sorte à pouvoir occuper une position débordante par rapport à au moins l'un des côtés desdits châssis et bâti, la partie ou côté de cette nacelle susceptible d'être amené en débordement latéral étant pourvu d'une ouverture (11), pour le passage des troncs (TR) des arbres fruitiers (A), lors de la récolte.

2. Matériel de récolte selon la revendications 1, **caractérisé en ce que** la nacelle de réception (8) présente un profil transversal en forme de V très ouvert dont la partie inférieure constitue une goulotte de collectage des fruits récoltés.

3. Matériel de récolte selon l'une des revendications 1 ou 2, **caractérisé en ce que** la nacelle de réception (8) comporte un fond plat (8b) et deux panneaux latéraux inclinés (8c).

4. Matériel de récolte selon l'une des revendications 2 ou 3, **caractérisé en ce que** le fond (8b) de la nacelle de réception (8) est muni de trous d'égouttage (8d).

5. Matériel de récolte suivant l'une quelconque des revendications 2 à 4, **caractérisé en ce qu'**une passerelle (17) est installée au-dessus du fond (8b) de la goulotte constituée par la nacelle de réception (8).

6. Matériel de récolte selon l'une quelconque des revendications 1 à 4, **caractérisé en ce que** les surfaces de réception des fruits (8c) de la nacelle (8) sont constituées par un matériau souple perméable, par exemple par un filet à petites mailles.

7. Matériel de récolte selon l'une quelconque des revendications 1 à 6, **caractérisé en ce que** l'ouverture d'accostage (11) est délimitée par une bordure rigide (16) dont le côté postérieur (16a) est incliné vers l'arrière, en considérant le sens d'avancement du matériel de récolte, en cours de travail.

8. Matériel de récolte suivant l'une quelconque des revendications 1 à 7, **caractérisé en ce qu'**un volet basculent (18) est installé à l'extrémité de la goulotte réceptrice (8), à l'opposé de l'autre extrémité de celle-ci munie de l'ouverture d'accostage (11).

9. Matériel de récolte selon l'une quelconque des revendications 1 à 8, **caractérisé en ce que** les bords libres des panneaux récepteurs (8c) de la nacelle de réception (8) sont munis de filets (8e') supportés, à leurs extrémités, par des tubes rigides (14) portés par des ressorts (15).

10. Matériel de récolte selon l'une quelconque des revendications 1 à 9, **caractérisé en ce que** le bâti basculant (5) est muni de moyens de guidage, par exemple de rails transversaux (6), assurant le guidage de la nacelle de réception (8) lors des déplacements de cette dernière.

11. Matériel de récolte suivant l'une quelconque des revendications 1 à 10, **caractérisé en ce que** les moyens assurant le pivotement du bâti basculant sont constitués par un vérin (7) fixé, par l'intermédiaire de ses extrémités opposées et au moyen d'articulations, d'une part, au châssis roulant (1) et , d'autre part, au bâti basculant (5).

12. Matériel de récolte selon l'une quelconque des revendications 1 à 11, **caractérisé en ce qu'**elle comporte des moyens assurant les mouvements de translation de la nacelle réceptrice (8) sur le bâti basculant (5), ces moyens étant, de préférence, constitués par un vérin (10) fixé, par l'intermédiaire de ses extrémités opposées, d'une part, audit bâti basculant (5) et, d'autre part, à ladite nacelle réceptrice (8).

13. Matériel de récolte suivant l'une quelconque des revendications 1 à 11, **caractérisé en ce que** la nacelle réceptrice (8) est montée avec une liberté de translation sur les rails transversaux horizontaux (6) du bâti basculant (5).
